# EUROPEAN PATENT APPLICATION

(11) **EP 4 019 378 A1**
(43) Date of publication of application: **29.06.2022**
(21) Application number: 20216546.0
(22) Date of filing: 22.12.2020
(51) Int. Cl.: B62J 43/30, B62M 6/90

(54) **USE OF AN USB-C PORT, PEDELEC OR ELECTRIC BICYCLE, METHOD**

(71) Applicant: Mahle International GmbH, 70376 Stuttgart (DE)
(72) Inventor: GONZALESDE JUAN, Carlos, 47006 Valladolid (ES)
(74) Representative: BRP Renaud & Partner mbB Rechtsanwälte Patentanwälte Steuerberater

(57) **Abstract**

The invention relates to a use of an USB-C port (1) for electrically charging an electric battery (2) of a pedelec (3) or of an electric bicycle (4) via the USB-C port (1).

## Description

The invention relates to a use of an USB-C port for charging a rechargeable electric battery if a pedelec or electric bicycle. The invention further relates to a pedelec or electric bicycle having a USB-C port being used in such a way and to a method for charging an electric battery of such a pedelec or electric bicycle.

Typically, pedelecs or electric bicycles have a rechargeable electric battery to supply an electric drive of the pedelec or electric bicycle with electric power. Generally speaking, one major difference between pedelecs and electric bicycles typically is, that electric bicycles can be propelled by the mechanic power generated by their electric drive without any pedaling of a rider of the electric bicycle, whereas in pedelecs the electric drive only is able to support pedaling of the rider and is unable to propel the pedelec on its own. However, usual pedelecs and electric bicycles both have in common, that their electric battery needs to be charged with electric energy regularly.

Commonly, each pedelec or electric bicycle manufacturer equips their products with their own specific charging port, such that the electric battery of such usual pedelecs or electric bicycles only can be charged by using a specific electric charging device having a plug that corresponds to the specific charging port. This leads to a lack of interchangeability of electric charging devises between common pedelecs or electric bicycles of different manufacturers. A standard for charging ports and charging devises has not yet been developed or enforced. Furthermore, the various specific charging ports of usual electric bicycles or pedelecs do not comply with universal charging devises.

It is thus an object of the present invention - in particular facing the aforementioned issues - to show new ways for charging ports of pedelecs or electric bicycles, for such pedelecs or electric bicycles and for methods for charging an electric battery of a pedelec or electric bicycle.

The basic idea of the invention therefore is that a USB-C port is used for electrically charging an electric battery of a pedelec or electric bicycle. Specs of USB-C ports are to be found in IEC 62680-1-3. Advantageously, USB-C ports have already proven as particularly suitable for charging electric batteries in several other technical applications but pedelecs or electric bicycles, such as cell phones and other electronic devises of daily use. Additionally, this also allows for universal charging devises to be used for charging the pedelec or electric bicycle via the USB-C port, which universal charging devises are not only limited in charging the electric battery of the pedelec or electric bike but also can be used for charging other electronic devises having a USB-C port and vice versa. Furthermore, USB-C ports are a mass product, what for a USB-C port can be implemented in a pedelec or electric bike at particular low sourcing cost.

The invention concerns a use of an USB-C port for electrically charging an electric battery of a pedelec or of an electric bicycle via the USB-C port. By that, a standardized charging port may be used for charging the pedelec or electric bicycle, such that universal charging devises having a USB-C plug can be used to charge the battery of the electric bicycle or pedelec. Additionally, pedelecs or electric bicycles can be equipped with such a USB-C port particularly cost efficiently.

According to a preferred embodiment, the USB-C port is configured to transmit an electric input power fed to the USB-C port when charging the electric battery, wherein the USB-C port preferably is a female USB-C port. Thus, said electric input power may comply with a standardized electric input power.

According to another preferred embodiment, the electric input power is max 100W, wherein the max 100W are defined by an electric voltage of max 20V at an electric amperage of max 5A. This allows for particularly quick charging of the electric battery. It goes without saying that any certain value of any physical parameter given in the present context generally may be subject to a tolerance of +/- 5%.

In another preferred embodiment, the pedelec or electric bicycle comprises a DC/DC-converter electrically connecting the USB-C port to the electric battery. The DC/DC-converter is configured to convert the electric input power to an electric charging power fed to the electric battery. This allows for charging the electrical battery reliably, even if the electric input power does not meet the requirements given by the specs of the electric battery.

According to another preferred embodiment, the electric charging power is max around 80W, wherein the max around 80W are defined by an electric voltage of max 42V at an electric amperage of max 2A. By that, the electric battery may be charged particularly well.

In another preferred embodiment, the USB-C port is arranged at and fastened to a frame or a handle bar of the pedelec or electric bicycle. Such a location of the USB-C port is particularly well reachable by a user of the pedelec or electric bicycle.

In another preferred embodiment, the pedelec or electric bicycle comprises a controller that controls an electric drive of the pedelec or electric bicycle. Said controller comprises the USB-C port. By that, as an advantage, electric power lines interconnecting the electric battery, the electric drive, the controller and the USB-C port can be kept particularly short.

According to another preferred embodiment, the USB-C port is configured to electrically connect a charging device that has a plug, which plug corresponds to the USB-C port. Thus, universal charging devises having a USB-C plug may be used as to charge the electric battery of the pedelec or electric bicycle.

The invention also relates to a pedelec or electric bicycle having an electric machine, in particular an electric motor, able to feed mechanic power to one wheel of the pedelec or electric bicycle. In addition, the pedelec or electric bicycle has at least one electric battery carried by a frame of the pedelec or electric bicycle and able to supply electric power to the electric machine. The pedelec or electric bicycle has a USB-C port which is electrically connected to the at least one electric battery, so that the at least one electric battery can be electrically charged by feeding an electrical input power to the USB-C-port. In other words, the USB-C port can be used according to the invention as described above. Thus, the above-mentioned advantages of the use of the USB-C port according to the invention transfer to the pedelec or electric bicycle according to the invention.

According to preferred an embodiment of the pedelec or electric bicycle, its electric battery is arranged at or in a downtube of the frame of the pedelec or electric bicycle. In this way, the electric battery can be shielded against dirt, in particular gravel or water, which is thrown towards the downtube whilst riding the pedelec or electric bicycle.

In another preferred embodiment of the pedelec or electric bicycle, the electric battery is arranged at or in a seat tube of the frame of the pedelec or electric bicycle. This allows for spare room at the frame of the pedelec or electric bicycle to accept the electric battery.

In another preferred embodiment of the pedelec or electric bicycle, the pedelec or electric bicycle has two separate electric batteries, a first of which is permanently arranged at least partially inside the down tube and a second of which is detachably fastened to the seat tube. As an advantage, the second battery may be used in order to extend a range of the pedelec or electric bicycle defined by a capacity of the first electric battery.

According to another preferred embodiment of the pedelec or electric bicycle, at least one electric battery is completely integrated into the frame. Such a pedelec or electric bicycle has a particularly well appearance.

According to another preferred embodiment of the pedelec or electric bicycle, there is no other charging port but the USB-C port. As an alternative or in addition, the USB-C port cannot feed electric power from the at least one electric battery to an external device. Thus, early exhaustion of the electric energy stored in the electric battery can be avoided.

The invention also concerns a method for charging an electric battery of an above-described pedelec or of an electric bicycle according the invention. According to this method the electric battery of the pedelec or electric bicycle is charged via an USB-C port. Then, the USB-C port of the pedelec or electric bicycle - in the aforementioned way - can be used according to the invention. Therefore, the above-stated advantages of the use of the USB-C port according to the invention and of the pedelec or electric bicycle according to the invention transfer to the method according to the invention.

Further important features and advantages of the invention are obtained from the subclaims, from the drawings and from the associated figure description by way of the drawings.

It is to be understood that the features mentioned above and still to be explained in the following cannot only be used in the respective combination stated but also in other combinations or by themselves without leaving the scope of the present invention.

Preferred exemplary embodiments of the invention are shown in the drawings and are explained in more detail in the following description, wherein same reference numbers relate to same or similar or functionally same components.

It shows, in each case schematically:
- Fig. 1: an example of an USB-C port for a use according to the invention,
- Fig. 2: an example of a pedelec electric bicycle according to the invention.

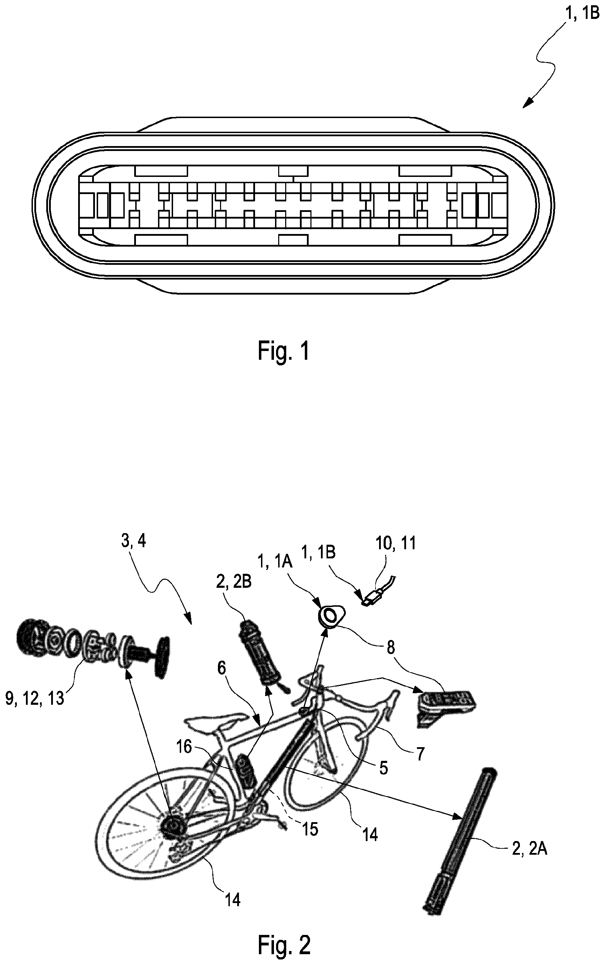

In figure 1 a USB-C port 1 is depicted exemplarily, which is configured for a use according to the invention. The USB-C port 1 according to the invention is used for electrically charging a rechargeable electric battery of a pedelec 3 or an electric bicycle 4 via the USB-C port 1.

Figure 2 shows an example of a pedelec 3 or an electric bicycle 4 according to the invention in an explosion-like view. The pedelec 3 or electric bicycle 4 has an electric machine 12, which is for example an electric motor 13. The electric machine 12 is able to feed mechanic power to one wheel 14 of the pedelec 3 or electric bicycle 4. Furthermore, pedelec 3 or electric bicycle 4 has at least one electric battery 2, which is carried by a frame 6 of the pedelec 3 or electric bicycle 4 and which is able to supply electric power to the electric machine 12. Pedelec 3 or electric bicycle 4 has a USB-C port 1, which is electrically connected to the at least one electric battery 2, so that the at least one electric battery 2 can be electrically charged by feeding an electric input power to the USB-C port 1. This means, the electric battery 2 is at least temporarily used for electrically charging the electric battery 2.

According to figure 2, the electric battery 2 of the pedelec 3 or electric bicycle 4 can be arranged at or in a downtube 15 of the frame 6 of the pedelec 3 or electric bicycle 4. The electric battery 2 can be arranged at or in a seat tube 16 of the frame 6 of the pedelec 3 or electric bicycle 4. In the example of figure 2 the pedelec 3 or electric bicycle 4 has two separate electric batteries 2A, 2B, a first of which is permanently arranged at least partially inside the downtube 15 and a second of which is fastened to the seat tube 16 in a detachably manner. Thus, the first electric battery 2A functions as permanent power supply, wherein the electric bicycle 4 or pedelec 3 may only be equipped with the second battery 2B in order to extend the range limited by the capacity of the first battery 2A, for example in case a user of the pedelec 3 or electric bicycle 4 aims to go for a farer distance journey.

It is furthermore to be seen from figure 2, that at least one electric battery 2, 2A, 2B is completely integrated into the frame 6. In the example of figure 2 the first electric battery 2A is completely integrated into the downtube 15 of the frame 6.

Figure 2 also illustrates, that there is no other charging port but the USB-C port 1. The USB-C port 1, in the example of figure 2, is configured to not be able to feed electric power from the at least one electric battery 2, 2A, 2B to an external device. In other words, the USB-C port 1 is only capable of transmitting electric power in one direction that leads towards the electric battery 2, 2A, 2B, whereas transmission of electric power in the opposite direction is suppressed permanently for instance by a semiconductor component being implemented in an electric power line connecting the USB-C port 1 to the electric battery 2, 2A, 2B.

The electric battery 2 of the pedelec 3 or electric bicycle 4 according to figure 2 is configured to be able to be charged by a method according to the invention. According to said method the electric battery 2 is charged via the USB-C port 2, which then is used according to the invention. The USB-C port 1 is configured to transmit an electric input power that is fed to the USB-C port 1 when charging the electric battery 2, wherein the USB-C port 1 can be a female USB-C port 1A. Such a female USB-C port 1A can be configured as to complement a male USB-C port 1B that corresponds to the example of figure 1.

The electric input power for example is max 100W, wherein the max 100W are defined by an electric voltage of max 20V at an electric amperage of max 5A. The pedelec 3 or electric bicycle 4 for example comprises a DC/DC-converter 5, which electrically connects the USB-C port 1 to the electric battery 2. The DC/DC-converter 5 is configured to convert the electric input power to an electric charging power being fed to the electric battery 2. For example, said electric charging power is max around 80W, wherein the max around 80W are defined by an electric voltage of max 42V at an electric amperage of max 2A.

The USB-C port 1 for example is arranged at and fastened to a frame 6 or handle bar 7 of the pedelec 3 or electric bicycle 4. The pedelec 3 or electric bicycle 4 comprises a controller 8 that controls an electric drive 9 of the pedelec 3 or electric bicycle 4. Said controller 8 for example comprises the USB-C port 1. The controller 8 can also comprise an on- and off-switch to activate or deactivate the pedelec 3 or electric bicycle 4.

Furthermore, figure 2 shows that the USB-C port 1 is configured to electrically connect a charging device 10 to the electric battery 2 of the pedelec 3 or electric bicycle 4, which charging device 10 has a plug 11 corresponding to the USB-C port 1.

## Claims

1. A use of an USB-C port (1) for electrically charging a rechargeable electric battery (2) of a pedelec (3) or of an electric bicycle (4) via the USB-C port (1).

2. The use according to claim 1,
**characterized in, that**
the USB-C port (1) is configured to transmit an electric input power fed to the USB-C port (1) when charging the electric battery (2), wherein the USB-C port (1) preferably is a female USB-C port (1A).

3. The use according to claim 2,
**characterized in, that**
the electric input power is max 100W, wherein the max 100W are defined by an electric voltage of max 20V at an electric amperage of max 5A.

4. The use according to any of claims 1 to 3,
**characterized in, that**
- the pedelec (3) or electric bicycle (4) comprises a DC/DC-converter (5) electrically connecting the USB-C port (1) to the electric battery (2),
- wherein the DC/DC-converter (5) is configured to convert the electric input power to an electric charging power fed to the electric battery (2).

5. The use according to claim 4,
**characterized in, that**
the electric charging power is max around 80W, wherein the max around 80W are defined by an electric voltage of max 42V at an electric amperage of max 2A.

6. The use according to any of the preceding claims,
**characterized in, that**
the USB-C port (1) is arranged at and fastened to a frame (6) or a handle bar (7) of the pedelec (3) or electric bicycle (4).

7. The use according to any of the preceding claims,
**characterized in, that**
- the pedelec (3) or electric bicycle (4) comprises a controller (8) that controls an electric drive (9) of the pedelec (3) or electric bicycle (4),
- the controller (8) comprises the USB-C port (1).

8. The use according to any of the preceding claims,
**characterized in, that**
the USB-C port (1) is configured to electrically connect a charging device (10), that has a plug (11) corresponding the USB-C port (1).

9. A pedelec (3) or electric bicycle (4),
- having an electric machine (12), in particular an electric motor (13), able to feed mechanic power to one wheel (14) of the pedelec (3) or electric bicycle (4),
- having at least one rechargeable electric battery (2) carried by a frame (6) of the pedelec (3) or electric bicycle (4) and able to supply electric power to the electric machine (12),
- having a USB-C port (1) which is electrically connected to the at least one electric battery (2), so that the at least one electric battery (2) can be electrically charged by feeding an electrical input power to the USB-C-port (1).

10. The pedelec (3) or electric bicycle (4) according to claim 9,
**characterized in, that**
the electric battery (2) is arranged at or in a downtube (15) of the frame (6) of the pedelec (3) or electric bicycle (4).

11. The pedelec (3) or electric bicycle (4) according to claim 9 or 10, **characterized in, that**
the electric battery (2) is arranged at or in a seat tube (16) of the frame (6) of the pedelec (3) or electric bicycle (4).

12. The pedelec (3) or electric bicycle (4) according to claims 10 and 11, **characterized in, that**
the pedelec (3) or electric bicycle (4) has two separate electric batteries (2A, 2B), a first of which is permanently arranged at least partially inside the down tube (15) and a second of which is detachably fastened to the seat tube (16).

13. The pedelec (3) or electric bicycle (4) according to any of claims 9 to 12, **characterized in, that**
at least one electric battery (2, 2A, 2B) is completely integrated into the frame (6).

14. The pedelec (3) or electric bicycle (4) according to any of claims 9 to 13, **characterized in, that**
- there is no other charging port but the USB-C port (1); or/and that
- the USB-C port (1) cannot feed electric power from the at least one electric battery (2, 2A, 2B) to an external device.

15. A method for charging a rechargeable electric battery (2) of a pedelec (3) or of an electric bicycle (4) according to any of claims 9 to 14, according to which method the electric battery (2) is electrically charged via the USB-C port (1).
